# EUROPEAN PATENT APPLICATION

(11) **EP 3 687 109 A1**
(43) Date of publication of application: **29.07.2020**
(21) Application number: 18875925.2
(22) Date of filing: 02.08.2018
(51) Int. Cl.: H04L 12/14

(54) **API CONTENT-BASED CHARGING METHOD AND CAPABILITY OPEN FUNCTIONAL ENTITY**

(30) Priority: 10.11.2017 CN 201711105130
(71) Applicant: Huawei Technologies Co., Ltd., Longgang District Shenzhen, Guangdong 518129 (CN)
(72) Inventor: CHEN, Shan, Shenzhen Guangdong 518129 (CN); CHAI, Xiaoqian, Shenzhen Guangdong 518129 (CN)
(74) Representative: Grünecker Patent- und Rechtsanwälte PartG mbB
(86) International application number: PCT/CN2018/098235
(87) International publication number: WO 2019/091149

(57) **Abstract**

An API content-based charging method and a capability exposure function entity are provided. The method includes: receiving, by a capability exposure function entity, an API calling request, where the API calling request includes an API identifier; determining, based on a correspondence between the API identifier and a content charging parameter, the content charging parameter corresponding to the API identifier; recording charging data based on the content charging parameter; and sending the charging data to a charging system. The corresponding capability exposure function entity is further disclosed. According to the solutions in this application, when receiving the API calling request, the capability exposure function entity may obtain the corresponding content charging parameter based on the API identifier, and record the charging data based on the content charging parameter, thereby implementing API content-based charging.

## Description

This application claims priority to Chinese Patent Application No. 201711105130.1, filed with the Chinese Patent Office on November 10, 2017 and entitled "API CONTENT-BASED CHARGING METHOD AND CAPABILITY EXPOSURE FUNCTION ENTITY", which is incorporated herein by reference in its entirety.

### TECHNICAL FIELD

This application relates to the field of computer technologies, and in particular, to an API content-based charging method and a capability exposure function entity.

### BACKGROUND

An application programming interface (application programming interface, API) is some predefined functions, and is intended to provide, for application programs and developers, a capability of accessing a set of routines based on software or hardware without accessing source code or understanding details of an internal working mechanism. An operator calls the API to expose an underlying network capability to a third-party application server or another network element of the operator, and the operator needs to charge for API calling. However, currently, non-charging or charging based on an API calling quantity is mainly used, and API content-based charging cannot be implemented.

### SUMMARY

This application provides an API content-based charging method and a capability exposure function entity, to implement API content-based charging.

According to an aspect of this application, an API content-based charging method is provided. The method includes: receiving, by a capability exposure function entity, an application programming interface API calling request, where the API calling request includes an API identifier; determining, by the capability exposure function entity based on a correspondence between the API identifier and a content charging parameter, where the content charging parameter corresponding to the API identifier; recording, by the capability exposure function entity, charging data based on the content charging parameter; and sending, by the capability exposure function entity, the charging data to a charging system. In this aspect, when receiving the API calling request, the capability exposure function entity may obtain the corresponding content charging parameter based on the API identifier, and record the charging data based on the content charging parameter, thereby implementing API content-based charging.

In a possible implementation, the API identifier corresponds to one content charging parameter, or the API identifier corresponds to a plurality of content charging parameters. In this implementation, the correspondence between the API identifier and the content charging parameter may be a one-to-one correspondence or a one-to-many correspondence.

In another possible implementation, the correspondence between the API identifier and the content charging parameter is configured in the capability exposure function entity or is obtained from a policy control function entity. In this implementation, the correspondence is configured in the capability exposure function entity, so that the capability exposure function entity can conveniently obtain the correspondence stored in the capability exposure function entity. Alternatively, the correspondence is obtained from the policy control function entity, so that the policy control function entity uniformly configures various policies, including the correspondence. This can save storage space of the capability exposure function entity.

In still another implementation, the API calling request further includes a caller identifier, the charging data includes the caller identifier, and the caller identifier is used to identify an identity of a requester sending the API calling request. In this implementation, based on the caller identifier, the capability exposure function entity can learn of the identity of the requester sending the API calling request, and during charging, the charging system can charge the caller as a charged party.

In still another implementation, the API calling request further includes an association parameter, where the association parameter is used to associate the API calling request with an API calling response, to perform associated charging. In this implementation, the API calling request, the API calling response, and a rollback operation need to be considered for associated charging, to avoid repetitive charging, thereby implementing accurate charging.

In still another implementation, the content charging parameter includes at least one of the following parameters: location information, quality of service QoS information, group information, a transmission policy, and charged-party information. In this implementation, the capability exposure function entity may call a corresponding underlying network capability based on the content charging parameter corresponding to the API identifier.

In still another implementation, the charging data further includes a parameter shared by charging message bodies and a configured parameter required for charging. The parameter shared by the charging message bodies includes at least one of the following parameters: a record type, a service identifier, the API identifier, the charged-party information, a node identifier, and a record sequence number. The configured parameter required for charging includes at least one of the following parameters: an API subtype, an association identifier, a record start time, duration, a user session connection identifier, a charging characteristic, an external-group identifier, a record closing reason, an API calling quantity, and a calling failure reason.

In still another implementation, the recording, by the capability exposure function entity, charging data based on the content charging parameter includes: calling, by the capability exposure function entity, a network capability based on the API calling request, and recording, based on the content charging parameter, the charging data generated for calling the network capability.

In still another implementation, the calling, by the capability exposure function entity, a network capability based on the API calling request, and recording, based on the content charging parameter, the charging data generated for calling the network capability includes: calling, by the capability exposure function entity, the network capability based on a group message sending request, and recording, based on the location information and the group information, the charging data generated for calling the network capability, where the charging data includes a quantity of group identifiers, a location, accuracy, a start time, load of a group message, a transfer success state, and a transfer failure state.

In still another implementation, the calling, by the capability exposure function entity, a network capability based on the API calling request, and recording, based on the content charging parameter, the charging data generated for calling the network capability includes: calling, by the capability exposure function entity, the network capability based on an event monitoring request, and recording, based on the location information, the charging data generated for calling the network capability, where the charging data includes a monitoring type, a maximum monitoring reporting quantity, an actual reporting quantity, a reporting time period, and an actual reporting timestamp.

In still another implementation, the calling, by the capability exposure function entity, a network capability based on the API calling request, and recording, based on the content charging parameter, the charging data generated for calling the network capability includes: calling, by the capability exposure function entity, the network capability based on a QoS configuration request, and recording, based on the QoS information, the charging data generated for calling the network capability, where the charging data includes a QoS attribute, application streaming, and duration or traffic.

According to another aspect of this application, a capability exposure function entity is provided. The capability exposure function entity has a function of implementing behavior of the capability exposure function entity in the foregoing method. The function may be implemented by hardware, or may be implemented by hardware executing corresponding software. The hardware or software includes one or more modules corresponding to the foregoing function.

In a possible implementation, the capability exposure function entity includes: a receiving unit, configured to receive an application programming interface API calling request, where the API calling request includes an API identifier; a processing unit, configured to determine, based on a correspondence between the API identifier and a content charging parameter, the content charging parameter corresponding to the API identifier, where the processing unit is further configured to record charging data based on the content charging parameter; and a sending unit, configured to send the charging data to a charging system.

In another possible implementation, the capability exposure function entity includes an input apparatus, an output apparatus, a memory, and a processor. The memory stores a set of program code. The processor is configured to call the program code stored in the memory, to perform the following operations: receiving an application programming interface API calling request, where the API calling request includes an API identifier; determining, based on a correspondence between the API identifier and a content charging parameter, the content charging parameter corresponding to the API identifier; recording charging data based on the content charging parameter; and sending the charging data to a charging system.

Based on a same inventive concept, for principles used by the apparatus to resolve a problem and beneficial effects thereof, refer to the foregoing various possible method implementations of the capability exposure function entity and beneficial effects thereof. Therefore, for implementation of the apparatus, refer to implementation of the method, and repeated parts are not described herein again.

Still another aspect of this application provides a computer-readable storage medium. The computer-readable storage medium stores an instruction. When the instruction is run on a computer, the computer is enabled to perform the method according to the foregoing aspect.

Still another aspect of this application provides a communications chip storing an instruction. When the instruction is run on a network device or a terminal device, a computer is enabled to perform the method according to the foregoing aspect.

Still another aspect of this application provides a computer program product including an instruction. When the instruction is run on a computer, the computer is enabled to perform the method according to the foregoing aspect.

### BRIEF DESCRIPTION OF DRAWINGS

To describe the technical solutions in the embodiments of the present invention or in the background more clearly, the following briefly describes the accompanying drawings required for describing the embodiments of the present invention or the background.
FIG. 1 is a schematic structural diagram of a communications system according to an embodiment of the present invention;
FIG. 2 is a schematic diagram of an exemplified network architecture of a network capability exposure function entity;
FIG. 3 is a schematic flowchart of an API content-based charging method according to an embodiment of the present invention;
FIG. 4 shows an exemplified capability exposure API supported by an existing SCEF;
FIG. 5a is a schematic configuration diagram of an exemplified content-based charging rule self-configured by an SCEF;
FIG. 5b is a schematic diagram of an exemplified content-based charging rule configured by a policy control function entity;
FIG. 6a-1 and FIG. 6a-2 are a schematic diagram of an exemplified group message calling and online API content-based charging procedure;
FIG. 6b-1 and FIG. 6b-2 are a schematic diagram of an exemplified group message calling and offline API content-based charging procedure;
FIG. 7a-1 and FIG. 7a-2 to FIG. 7g are schematic diagrams of exemplified charging data in content-based charging for a plurality of API calling requests;

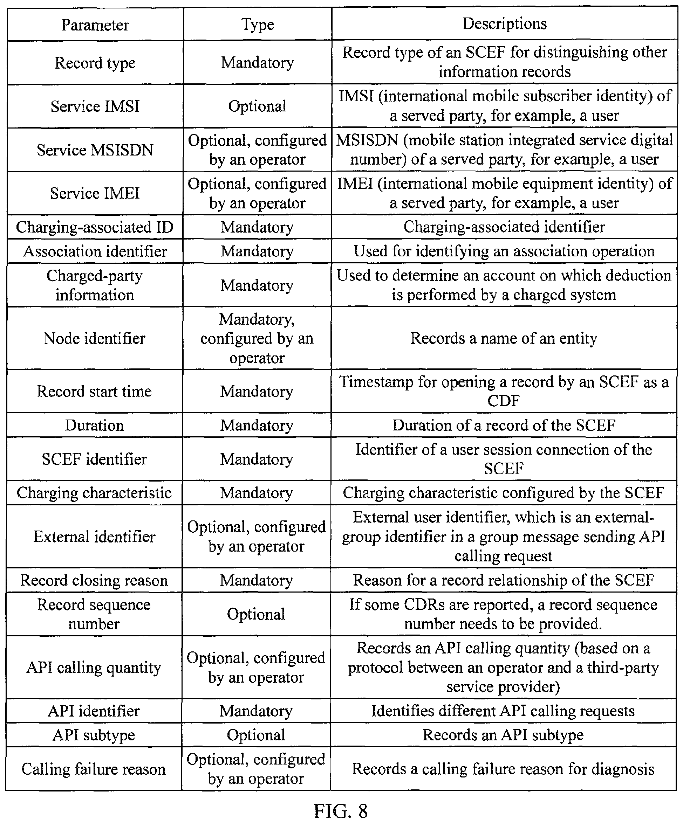

FIG. 8 is a schematic diagram of charging data in calling quantity-based charging;

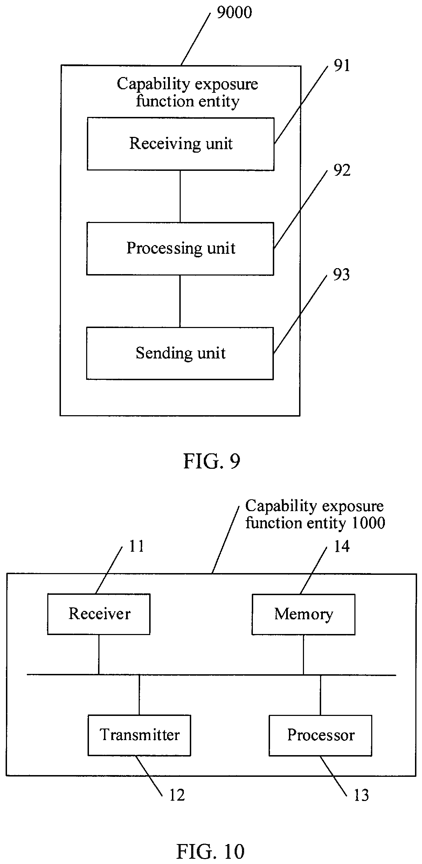

FIG. 9 is a schematic structural diagram of a capability exposure function entity according to an embodiment of the present invention; and
FIG. 10 is a schematic diagram of a hardware architecture of a capability exposure function entity according to an embodiment of the present invention.

### DESCRIPTION OF EMBODIMENTS

The following describes the embodiments of the present invention with reference to the accompanying drawings in the embodiments of the present invention.

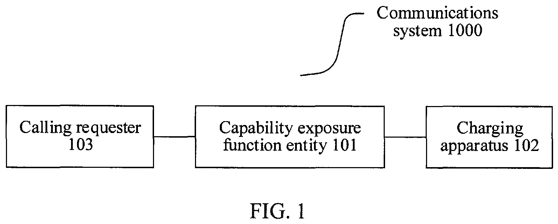

FIG. 1 is a schematic structural diagram of a communications system according to an embodiment of the present invention. As shown in FIG. 1, the communications system 1000 includes a capability exposure function entity (network exposure function, NEF) 101 and a charging system 102. A calling requester 103 sends an API calling request to the capability exposure function entity 101. The capability exposure function entity 101 may call a plurality of network capabilities through a series of interfaces, to obtain a calling result for API calling; perform charging based on called API content, to generate charging data; and send the charging data to the charging system 102 for charging.

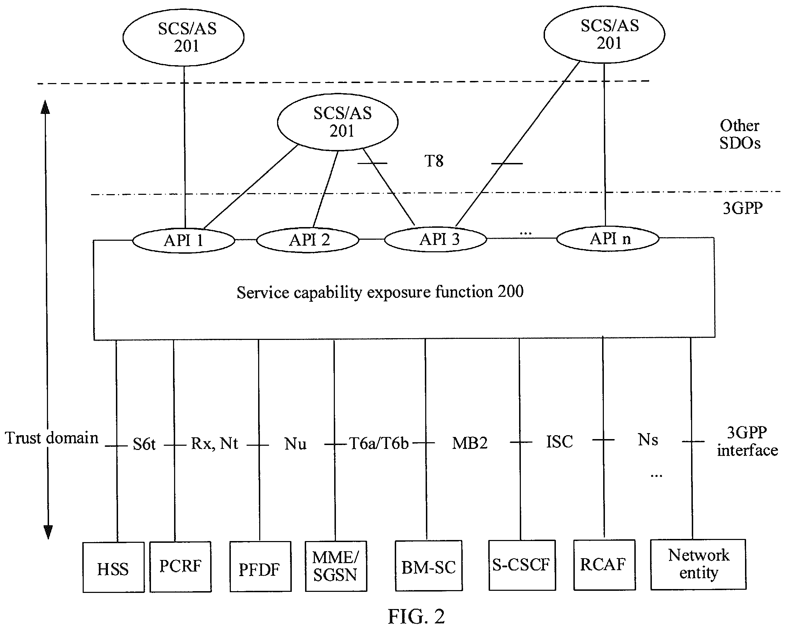

FIG. 2 is a schematic diagram of a network architecture of capability exposure of a network capability exposure function (service capability exposure function, SCEF) network element. The capability exposure function entity 101 in FIG. 1 may be the SCEF 200 herein, and the calling requester 103 in FIG. 1 may be a service capability server/an application server (service capability server/application server, SCS/AS) 201 herein. The SCS/AS 201 calls, by using a platform: the SCEF 200, a network capability exposed by an operator. The SCS/AS includes an application server provided by a third-party service provider or the operator.

As shown in FIG. 2, the SCEF 200 interacts with the SCS/AS 201 through a northbound interface T8, interacts with a charging apparatus (not shown) through a charging interface, and interacts with an underlying network capability entity through southbound interfaces such as Rx, Nt, Nu, Ns, S6a, S6b, and S6.

T8: is an interface between the SCS/AS and the SCEF, and is responsible for transmitting API calling request and API calling response.

Nt: is an interface between the SCEF and a policy and charging rules function (policy and charging rules function, PCRF), and is responsible for configuring a delivery parameter and reporting information.

Rx: is an interface between the SCEF and the PCRF. The SCEF is used as an AF (application function) to deliver required application layer information and requirement to a policy decision function entity.

Nu: is an interface between the SCEF and a packet flow description function (packet flow description function, PFDF), and is responsible for configuring a delivery parameter and managing a flow template.

Ns: is an interface between the SCEF and a radio access network congestion awareness function (radio access network congestion awareness function, RCAF), and is responsible for configuring a delivery parameter and obtaining network status information, for example, congestion information.

S6a/S6b/S6: are interfaces between the SCEF and a home subscriber server (home subscriber server, HSS)/mobility management entity (mobility management entity, MME)/serving general packet radio service (general packet radio service, GPRS) support node (Serving GPRS Support Node, SGSN), and are responsible for configuring a delivery parameter and obtaining user mobility information, subscription information, and the like.

In this embodiment of the present invention, the SCS/AS interacts with the SCEF through the API-based interface T8, to call an underlying capability. The underlying capability is obtained through an interface between the SCS/AS and the SCEF. A charging system of an operator needs to charge the SCS/AS for API calling.

This application provides an API content-based charging method and a capability exposure function entity. When receiving an API calling request, the capability exposure function entity may obtain a corresponding content charging parameter based on an API identifier, and record charging data based on the content charging parameter, thereby implementing API content-based charging.

It should be noted that in the embodiments of the present invention, terms "system" and "network" may be used interchangeably. A "plurality of" refers to two or more. In view of this, in the embodiments of this application, the "plurality of" may also be understood as "at least two". The term "and/or" describes an association relationship between associated objects and represents that three relationships may exist. For example, A and/or B may represent the following three cases: Only A exists, both A and B exist, and only B exists. In addition, the character "/" generally indicates an "or" relationship between the associated objects.

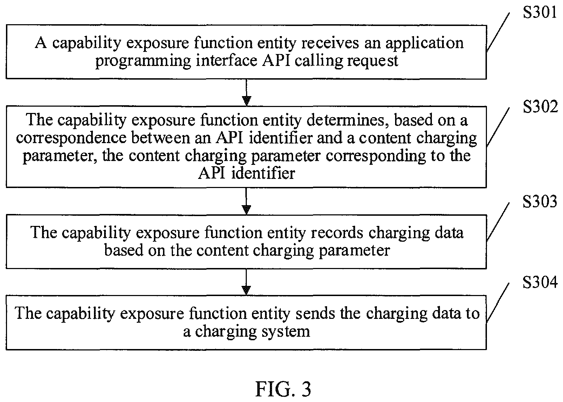

FIG. 3 is a schematic flowchart of an API content-based charging method according to an embodiment of the present invention. The method may include the following steps:
S301. A capability exposure function entity receives an application programming interface API calling request, where the API calling request includes an API identifier.
S302. The capability exposure function entity determines, based on a correspondence between the API identifier and a content charging parameter, the content charging parameter corresponding to the API identifier.
S303. The capability exposure function entity records charging data based on the content charging parameter.
S304. The capability exposure function entity sends the charging data to a charging system.

This embodiment is described by using an example in which the capability exposure function entity is an SCEF and a calling requester is an SCS/AS.

The SCS/AS needs to obtain network status information, user mobility information, or subscription information, and the like. In this case, the SCS/AS sends the API calling request to the SCEF through a T8 interface, and then, the SCEF calls an underlying network capability through a corresponding interface to obtain the network status information, user mobility information, or subscription information and feeds back the information to the SCS/AS. For example, the SCEF obtains the network status information from an RCAF through an Ns interface, obtains the user mobility information, the subscription information, and the like from an HSS/MME/SGSN through an S6a/S6b/S6 interface. A charging mode and a specific underlying network capability that is called by the SCEF based on the API calling request to obtain required content are described in detail below.

In this embodiment, charging is performed based on API content. Each API calling request has a corresponding content charging parameter. The content charging parameter includes at least one of the following parameters: location information, quality of service (quality of service, QoS) information, group information, a transmission policy, and charged-party information. The API calling request includes the API identifier. There is a correspondence between the API identifier and the content charging parameter. Specifically, each API identifier may correspond to one or more content charging parameters. The API identifier may have different granularities. For example, the API identifier can identify a function (high function) description, or identify a function description and a type (type) description, or identify a function description, a type description, and a subtype (subtype) description.

Further, the API calling request may further include a caller identifier. The caller identifier is used to identify an identity of a requester (for example, the SCS/AS) sending the API calling request. The SCS/AS includes an application server provided by a third-party service provider or provided by an operator. The caller identifier may be further used to identify a charged party. In this case, the charging data further includes the caller identifier. Certainly, the charged party may alternatively use another identifier.

Further, the API calling request may further include an association parameter, where the association parameter is used to associate the API calling request, for example, associating the API calling request with an API calling response, to perform associated charging. Detailed descriptions are provided below.

Certainly, the API calling request may be alternatively charged for according to another charging rule. The API charging rule includes at least one of the following rules: content-based charging, calling quantity-based charging, and non-charging. The charging rule may also correspond to the API identifier. If the charging rule is content-based charging, the API identifier is further used to correspond to the content charging parameter.

The SCEF pre-configures the correspondence between the API identifier and the content charging parameter, or may obtain the correspondence from another apparatus, for example, a policy control function entity (for example, a PCRF). Based on obtaining sources of the correspondence, that the SCEF pre-configures the correspondence and that the SCEF obtains the correspondence from the PCRF are specifically described below.

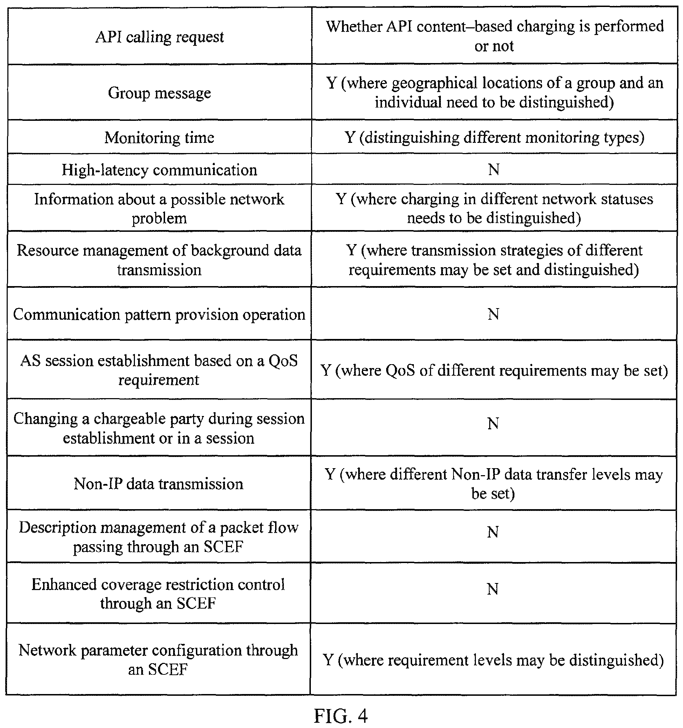

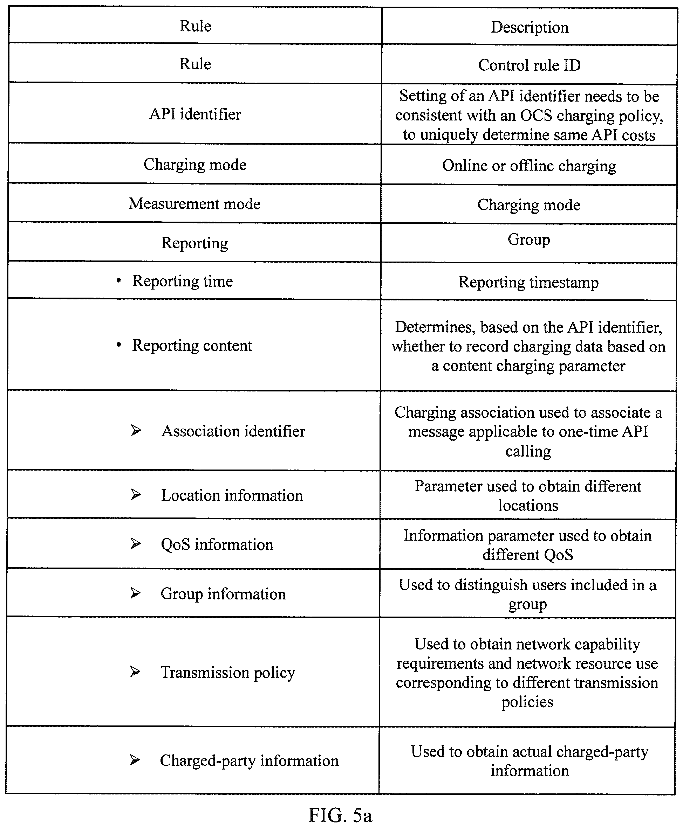

Specifically, in an implementation, the SCEF pre-configures the correspondence between the API identifier and the content charging parameter. In this case, the method further includes: configuring a correspondence between at least one API identifier and at least one content charging parameter. S202 specifically includes: search the correspondence for the content charging parameter corresponding to the API identifier. Specifically, after configuring the correspondence between the API identifier and the content charging parameter, the SCEF may determine the corresponding content charging parameter based on the API identifier carried in the API calling request. The SCEF may determine, based on a configuration policy, a charging rule and the content charging parameter required for API content-based charging. In an existing system, an operator provides a limited service exposure capability. FIG. 4 enumerates capability exposure APIs supported by an existing SCEF (in FIG. 4, only some API calling requests need to be charged for based on content). Therefore, a charging rule may be set through configuration. For configuration of the calling quantity-based charging mode and the non-charging mode, refer to existing solutions, and details are not described. With regard to configuration of content-based charging, specifically, the content charging parameter may be set based on a granularity of the API identifier. For example, the SCEF sets the API identifier of the high function granularity to determine whether charging is performed based on the API content and whether the corresponding content charging parameter is set. Alternatively, the SCEF sets the API identifier of the type granularity to determine whether charging needs to be performed based on the API content and whether the corresponding content charging parameter needs to be set. Alternatively, the SCEF needs to set the API identifier of the subtype granularity to determine whether charging needs to be performed based on the API content and whether the corresponding content charging parameter needs to be set. FIG. 5a is a schematic configuration diagram of an exemplified content-based charging rule self-configured by the SCEF. In FIG. 5a, the content charging parameter includes at least one of the following parameters: location information, quality of service information, group information, a transmission policy, and charged-party information.

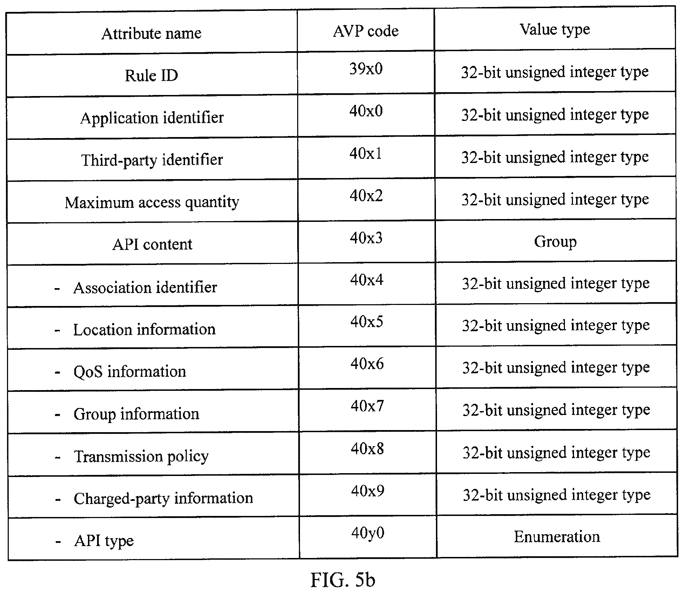

In another implementation, S202 specifically includes: receiving the correspondence that is between the API identifier and the content charging parameter and that is sent by a policy control function entity. S202 specifically includes: search the correspondence for the content charging parameter corresponding to the API identifier. Herein, the policy control function entity (for example, a PCRF) is a maker of a policy, where the policy includes the correspondence between the API identifier and the content charging parameter, and the SCEF is an execution unit of the policy. The PCRF sends the correspondence to the SCEF through an Nt interface. FIG. 5b is a schematic diagram of an exemplified content-based charging rule configured by the policy control function entity, where policies sent by the policy control function entity to the SCEF include a control policy and a charging policy. The control policy includes a threshold (where API calling in a current period is stopped if the threshold is reached), a third-party identifier (for example, a caller identifier or an application identifier), and the like. The charging policy includes the API identifier, the content charging parameter, and a quantity of request messages. The content charging parameter includes at least one of the following parameters: location information, quality of service information, group information, a transmission policy, or charged-party information.

There are mainly two bases for the PCRF to make a policy for the SCEF:

Dynamic rule: User subscription information and spending limit (spending limit) information which are fed back to the PCRF according to a policy control and charging (policy control and charging, PCC) rule, and which are used to generate a charging rule.

Static rule: a rule pre-configured by the operator. A basis of the rule pre-configured by the operator is a protocol signed by the operator and a third-party service provider, and the rule pre-configured by the operator may include a charging mode (content-based charging or request message-based charging), a charge rate, an access control limit, a service-level agreement (service-level agreement, SLA) guarantee, a roaming agreement, and the like.

In still another implementation, S202 specifically includes: sending a content charging parameter obtaining request to a policy control function entity, where the content charging parameter obtaining request includes the API identifier; and receiving the content charging parameter that corresponds to the API identifier and that is sent by the policy control function entity.

The SCEF determines the content charging parameter corresponding to the API identifier. Specifically, the SCEF receives the API calling request of the SCS/AS, parses a message body of the API calling request to obtain the API identifier, and the corresponding content charging parameter. Further, API calling is mainly completed by using the API calling request and the API calling response. If the SCEF receives the API calling request of the SCS/AS, the SCEF parses the message body of the API calling request, to map to the corresponding content charging parameter. A procedure thereof mainly includes: identifying the API identifier, identifying an API message type, matching an API charging rule (where if the charging rule is content-based charging, the corresponding content charging parameter is further matched), storing universal information such as an SCS/AS ID and an MSISDN that are defined in the charging rule, and storing API charging data. The API charging data is specifically the API content (traffic, duration, network performance, location precision, and the like) or an API calling quantity. If the SCEF reports a response to the API calling request of the SCS/AS, the SCEF identifies an association identifier, searches whether there is charging information that can be associated with, identifies an API charging mode, and stores API charging information.

After determining the content charging parameter corresponding to the API identifier carried in the API calling request, the SCEF records the charging data based on the content charging parameter. It should be noted that, if the charging rule is calling quantity-based charging, only a quantity of the API calling requests needs to be recorded in the charging data, and charging is performed based on the quantity of the API calling requests; if the charging rule is non-charging, the charging data may not be recorded, or the charging data is recorded and sent to the charging system, but the charging system does not perform charging. This embodiment focuses on how to record the charging data in the content-based charging and how to perform charging. S303 specifically includes: calling, by the capability exposure function entity, a network capability based on the API calling request, and recording, based on the content charging parameter, the charging data generated for calling the network capability.

In addition, the charging data further includes a parameter shared by charging message bodies and a configured parameter required for charging. Specifically, the charging system determines, for the SCEF, a parameter shared by the charging message bodies and a configured parameter required for charging. The parameter shared by the charging message bodies includes at least one of the following parameters: a record type, a service identifier, the API identifier, the charged-party information, a node identifier, or a record sequence number. The configured parameter required for charging includes at least one of the following parameters: an API subtype, an association identifier, a record start time, duration, a user session connection identifier, a charging characteristic, an external-group identifier, a record closing reason, an API calling quantity, or a calling failure reason. For specific parameter meanings, refer to FIG. 7a-1 and FIG. 7a-2. The parameter shared by charging message bodies for different API calling requests may be the same, the configured parameter required for charging for different API calling requests may be the same, the content charging parameter for different API calling requests may be the same may be different.

In an example, if the API calling request is a group message, S303 specifically includes: calling, by the capability exposure function entity, the network capability based on a group message sending request, and recording, based on the location information and the group information, the charging data generated for calling the network capability, where the charging data includes a quantity of group identifiers, a location, accuracy, a start time, load of a group message, a transfer success state, and a transfer failure state. As shown in FIG. 7a-1 and FIG. 7a-2, the quantity of group identifiers is used to parse out a quantity of UEs included in a group; the location is used to determine group distribution based on a data type specified by the accuracy; the accuracy is used in combination with the location, and is used to identify a type of the location; the start time is used to indicate a time of transferring the group message; the load of the group message refers to network resources required for the group message, and mainly refers to traffic; the transfer success state is used to indicate a quantity of pieces of successfully sent information in the group message; and the transfer failure state is used to indicate a quantity of pieces of unsuccessfully sent information in the group message. Specifically, the SCEF finds, based on the API identifier of the group message, that the content charging parameter corresponding to the API identifier includes the location information and the group message. The location information may be information about a target location. The SCEF calls an underlying network capability based on the information about the target location, to obtain a quantity of users included in a cell at the target location, thereby determining a total quantity of messages needing to be sent in a group. Then, the SCEF calls the underlying network capability to send a group message to the users in the cell at the target location, and uses the group information to distinguish the users. The SCEF records the charging data based on a quantity of users to whom the group message is sent or a quantity of messages, and sends the charging data to a charging apparatus. The charging apparatus charges a caller based on the obtained charging data.

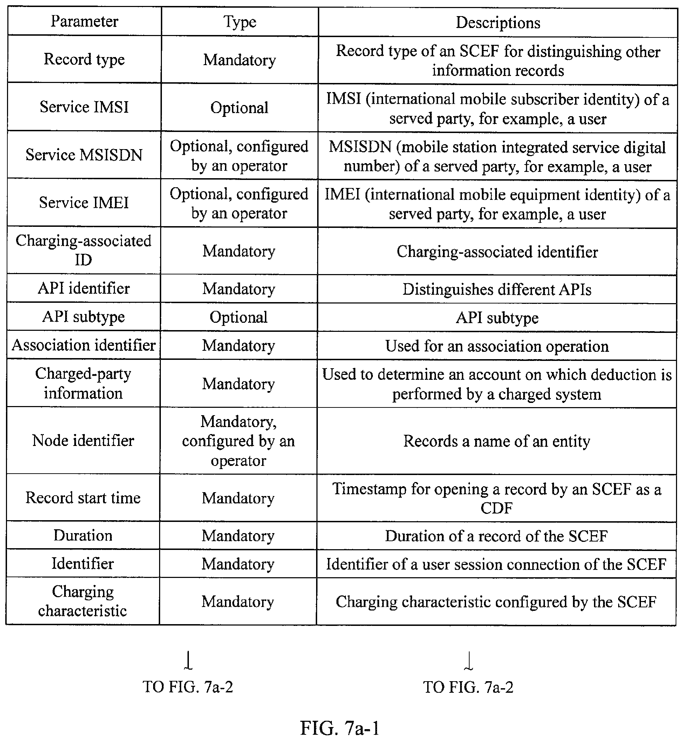

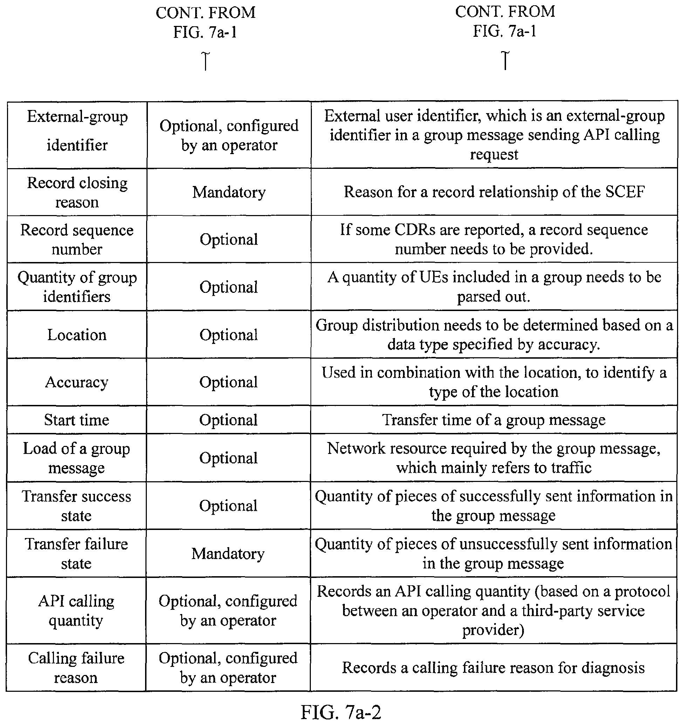

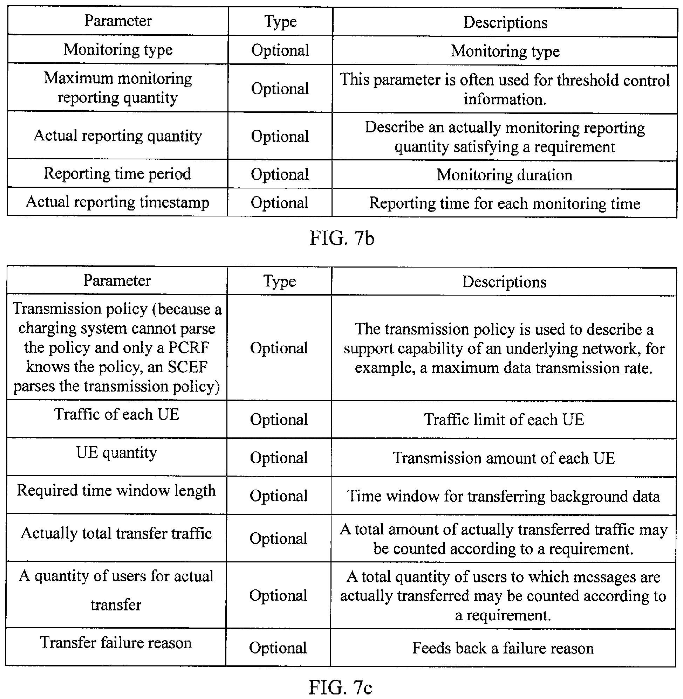

In another example, if the API calling request is an event monitoring request, S303 specifically includes: calling, by the capability exposure function entity, the network capability based on an event monitoring request, and recording, based on the location information, the charging data generated for calling the network capability, where the charging data includes a monitoring type, a maximum monitoring reporting quantity, an actual reporting quantity, a reporting time period, and an actual reporting timestamp. FIG. 7b shows charging information of content-based charging for a monitoring event, where a maximum monitoring reporting quantity is used for threshold control; an actual reporting quantity describes an actual monitoring reporting format satisfying a requirement; a reporting time period is used to record monitoring duration; and an actual reporting timestamp is used to record a reporting time of each monitoring event. Specifically, the SCEF finds, based on the API identifier of the event monitoring request, that the content charging parameter corresponding to the API identifier includes the location information. The SCEF calls, based on the location information, an underlying network capability to perform event monitoring on the location area, to obtain the corresponding charging data, where parameters of the charging data are as described above. Then, the SCEF sends the obtained charging data to a charging apparatus for charging.

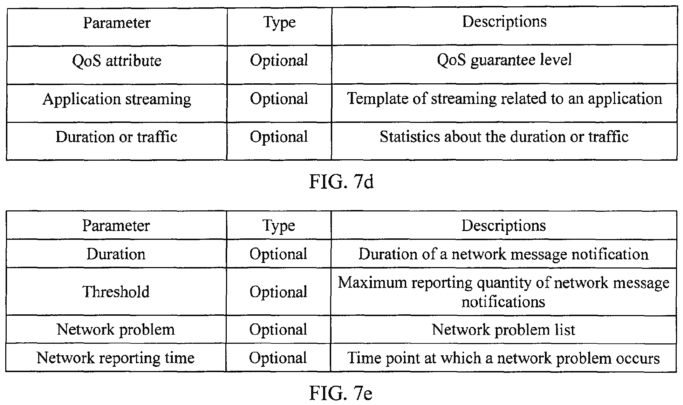

In still another example, if the API calling request is a QoS configuration request, S303 specifically includes: calling, by the capability exposure function entity, the network capability based on a QoS configuration request, and recording, based on QoS information, the charging data generated for calling the network capability, where the charging data includes a QoS attribute, application streaming, and duration or traffic. FIG. 7d shows charging information of content-based charging for the QoS configuration request, where a QoS attribute is used to indicate a QoS guarantee level; application streaming indicates a template of streaming related to an application; and duration or traffic is used to collect statistics about the duration or traffic. Specifically, the SCEF finds, based on the API identifier of the QoS configuration request, that the content charging parameter corresponding to the API identifier includes the QoS information. The SCEF calls, based on the QoS information, the corresponding underlying network capability to perform QoS configuration, to obtain the corresponding charging data, and sends the charging data to a charging apparatus. The charging apparatus performs charging based on the charging data.

In addition, callers need to be identified for API calling, and two cases in which the API calling is initiated by the SCS/AS and the SCEF are included.

The SCS/AS initiates the API calling, for example, configuration, set, or request.

The SCEF sends a response, for example, a monitoring report, to the API calling request to the SCS/AS.

In this case, the API calling request and the API calling response need to be considered for associated charging. The API calling request initiated by the SCS/AS and the API calling response sent by the SCEF to the SCS/AS may have an association relationship. For example, for a monitoring service API, the SCS/AS sends an event monitoring API calling request, and the SCEF sends a monitoring report to the SCS/AS. Because an API calling request of the SCS/AS and an API calling response may have a time difference, an association parameter is needed to associate the calling request information and calling response information that have a causal relationship, and charging is performed based on a set charging rule. The association parameter is mainly used to associate a request and a response that have a relationship; or used to associate with a rollback operation, for example, modifying/deleting a group message. The association parameter may be used to link previous group message delivery settings. The SCEF generates an SCEF reference ID by using a T8 long term transaction reference identifier (T8 long term transaction reference id, TLTRI) received from the SCS/AS, and subsequently uses the SCEF reference ID to interact with another network element.

After receiving information reported by an MME/SGSN/PCRF, the SCEF associates a corresponding API calling request based on the association identifier, and records the charging data.

After recording the charging data based on the content charging parameter, when a charging reporting trigger condition is satisfied, the SCEF sends the charging data to the charging system for charging. The charging data includes the caller identifier. By default, the charging system charges a caller account based on the charging data in case that the caller identifier is a charged party. If a charged party is determined, the charging system charges an account of the charged party, for example, an end user, based on the charging data.

The API calling charging may be classified into online charging and offline charging based on a requirement of an operator, a use scenario, and the like. The online charging means that the charging system needs to perform credit control before API calling. The offline charging means that information related to API calling is first recorded in the SCEF, and is reported to the charging system after a reporting condition is satisfied. The following provides descriptions separately.

### (1) Online charging

After receiving the API calling request of the SCS/AS, the SCEF may perform charging in an immediate event charging (immediate event charging, IEC) mode, or perform charging in an event charging with unit reservation (Event Charging with Unit Reservation, ECUR) mode, or perform charging in a session charging with unit reservation (Session Charging with Unit Reservation, SCUR) mode, or the like.

Specifically, in the IEC/ECUR charging mode, after receiving online charging information of the SCEF, an online charging system queries a charge rate of a corresponding calling quantity based on the API identifier (where based on a contract signed by an operator and a third party, a uniform price may be used, or tiered charging may be used), and performs event-based charging on the third party based on the charge rate and the calling quantity.

In the SCUR charging mode, the online charging system receives online charging information of the SCEF in the SCUR, queries costs of corresponding content-based charging based on the API identifier, and provides quota based on different types of content. The SCEF allows, based on the quota assigned by an OCS, an API to use a resource. After the assigned quota is used up, reporting is triggered to apply for a new quota. The quota is used and managed in an existing manner.

It should be noted that when receiving a subsequent operation with an association parameter, for example, refund, the online charging system performs associated charging.

### (2) Offline charging

If the offline charging is used, the SCEF records charging information in an offline charging data record. Specifically, a reporting trigger condition of the offline charging data record is as follows:
trigger condition for opening the offline charging data record: The offline charging data record is opened when the first API calling request of the SCS/AS is received or the first API calling response report is received, or when the first API calling request of the SCS/AS for an operation based on a T8 interface is received.
trigger condition for adding in the offline charging data record: Offline charging information is added to the offline charging data record when a subsequent calling or association operation of the same SCS/AS is performed.
trigger condition for closing the offline charging data record: The offline charging data record is closed when constraints such as a specified time, a specified capacity, and a maximum calling quantity are satisfied.

When a charging reporting condition configured in the SCEF is satisfied, the SCEF needs to report the charging information to the charging system, so that the charging system performs operations such as clearing and settlement. Specifically, after receiving the offline charging information reported by the SCEF, an offline charging system performs, within a charging period, association based on the caller identifier, an identifier of the charged party, and the association parameter (TLTRI or TITL), and charges, within a charging period, for all API calling requests based on a preset charge rate. The charging reporting condition refers to a charging reporting rule. For example, when the offline charging information reaches 10M, the offline charging information is reported. Alternatively, during the offline charging information is opened, traffic used by the SCS/AS or used for a T8-based interaction operation reaches 1G. For example, the offline charging information has been opened for five hours, the offline charging information is reported, and a special event triggers the reporting the offline charging information. The SCEF collects and reports the charging information in the following two manners:
Manner 1: The SCEF receives request information (an HTTP message in a Restful protocol) of the SCS/AS, and reports message content message content to the charging system without parsing. In this case, the charging system needs to parse the API message, to obtain information related to API charging.

Note: The SCEF receives a RESTful protocol message, and a Diameter protocol is used between the SCEF and the charging system. The SCEF needs to have a protocol conversion capability.

Manner 2: The SCEF parses and collects information, for example, QoS and a location. The SCEF needs to parse a message, and the charging system needs to clarify meanings of a field.

Several examples are used below to specifically describe a manner of charging for the API calling.

In an example, FIG. 6a-1 and FIG. 6a-2 are a schematic diagram of an exemplified group message calling and online API content-based charging procedure. In this example, an ECUR online charging mode is used. If an IEC mode is used, step S614 is not included. Specifically, the procedure mainly includes the following steps.

S601 to S604. The SCS/AS applies for an assigned TMGI (temporary mobile group identity) number, to transfer a subsequent group message. This interaction is optional. It should be noted that generally, a TMGI assignment request may not be charged for as an API calling request. However, if an operator requires, a TMGI API calling quantity and a calling time may be recorded, and are reported together in the charging data (where even though the charging data is API content-based charging data, information about the calling quantity is recorded).

S605. The SCS/AS interacts with a terminal device (for example, user equipment, UE) at an application layer, and receives related information sent by an MBMS, for example, a TMGI and a start time.

S606. The SCS/AS sends a group message sending request to the SCEF, and the SCEF receives the group message sending request. The group message sending request carries an identifier of the SCS/AS, and may further carry request parameters such as a location, accuracy, a group identity, a start time, and load.

S607. The SCEF and an HSS authenticate the group message sending request for authorizing the SCS/AS.

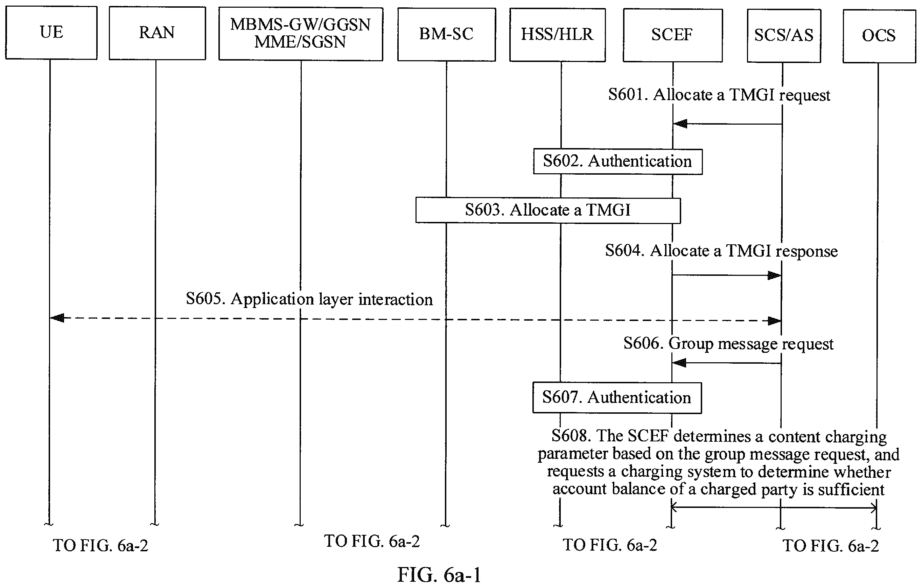

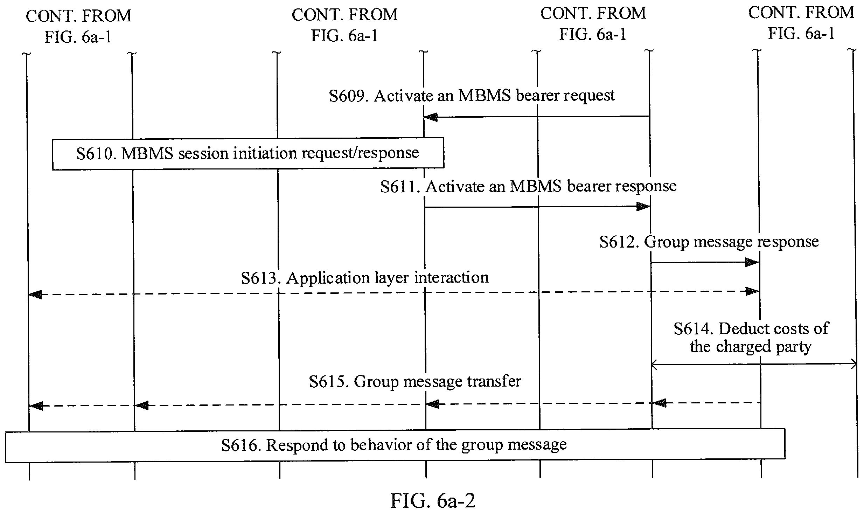

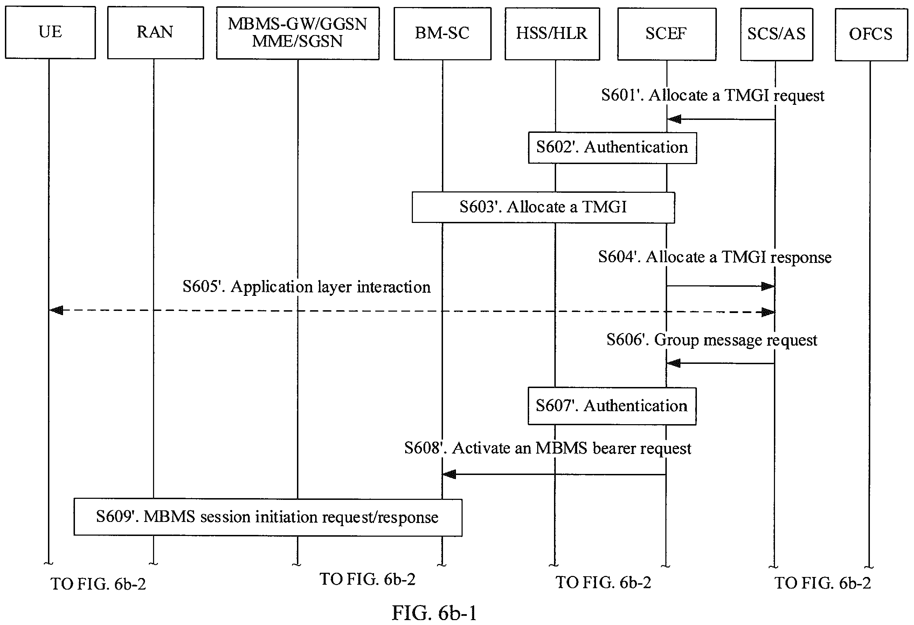

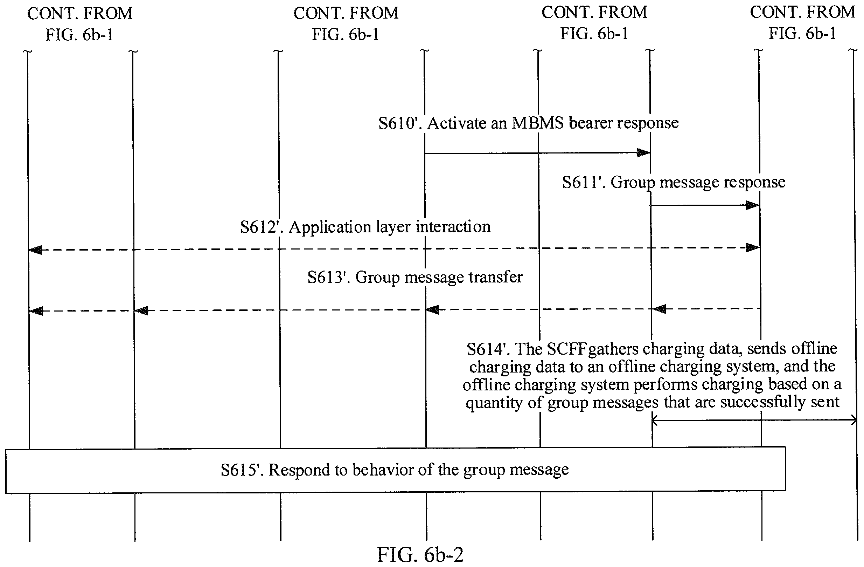

The SCEF parses an API request packet to obtain parameter information of an API identifier and the identifier of the SCS/AS to parse an identifier of a third-party caller; determines, based on a charging policy and a control policy that are configured by the SCEF and the API identifier, as shown in FIG. 6a, that an API of a group request is an API in API content-based charging, where the group message sending request is a group request; obtains, based on an SCEF configuration, parameter information required for API content; and determines a charging mode based on the SCEF configuration.

Online charging: A CCA message is sent to the charging system, where the CCA message carries the identifier of the SCS/AS, API content information (a location, accuracy, a group identity (where a quantity of users included in a group is obtained through parsing), a start time, and load) in the group message sending request, online charging calculates, by using required information (information in a table and universal information in a CCR/CCA, for example, a domain, which are needed by the online system to calculate charges) based on a charge rate, a quota required for a current group transmission, and the SCEF is authorized to allow exposed API charging. Otherwise, API calling is forbidden.

Offline charging: A CDR is created and opened, and the CDR includes some information . Subsequently, more information is added in the CDR. When a reporting condition is satisfied, the CDR is closed and is reported to the charging system.

FIG. 7a-1 and FIG. 7a-2 are a schematic diagram of charging data in the group message. The charging data includes a parameter shared by charging message bodies, charging information recorded based on the content charging parameter, and a configured parameter required for charging. The charging data may be selected based on a requirement, and selection attributes include optional, required, operator-configured selection, and the like. The charging data recorded based on the content charging parameter in the group message includes a quantity of group identifiers, a location, accuracy, a start time, load of a group message, a transfer success state, and a transfer failure state.

S608. The SCEF determines the content charging parameter based on a group request message, and requests the charging system to determine whether account balance of the charged party is sufficient. Herein, the charging system is an online charging system, and the charged party needs to be charged in advance.

S609 to S611. Transmit a multimedia broadcast multicast service (Multimedia Broadcast Multicast Service, MBMS).

S612. The SCEF feeds back a group message sending response to the SCS/AS, and the SCS/AS receives the a group message sending response. The a group message sending response may carry some parameters, for example, a TMGI, an association identifier of the request, a reception status, and a possible receiver IP address.

S613. The SCS/AS interacts with the UE at the application layer, receives related information sent by the MBMS, for example, a TMGI and a start time.

S614. The online charging system deducts costs of the charged party.

S615. Transfer the group message.

S616. Respond to the group message.

FIG. 6a-1 and FIG. 6a-2 are a schematic diagram of an exemplified group message calling and online API content-based charging procedure. Different from the procedure in FIG. 6a-1 and FIG. 6a-2, after transferring the group message, the SCEF sends offline charging data to the offline charging system. That is, after S613' is performed, S614' is performed, and the SCEF gathers the charging data, sends the offline charging data to the offline charging system. The offline charging system performs charging based on a quantity of group messages that are actually successfully sent.

The SCEF reports a group message transfer status, to indicate whether the group message is successfully sent.

1. Feedback on successful sending and failed sending:

### • Online charging:

The SCEF needs to report, based on the group messages that are successfully sent that are in the status information or fail to be sent and that are in the status information, online charging data to the charging system for rollback, that is, information indicating that a user has been charged is refunded.

Further, to simplify operations, the SCEF needs to collect statistics about a quantity of failure states, and sends the quantity of failure states, the identifier of the SCS/CS, a user identifier, an operation identifier, and the charged-party information to the charging system.

### • Offline charging: The quantity of failure states is recorded.

### 2. Start time setting:

If a network does not send data before the start time, during online charging, a pre-authorization message needs to be sent to request authorization, or expenses are requested to be refunded for a service that has been charged. During offline charging, an actual transfer status needs to be fed back in a failure message.

Step 14: After receiving the group information, the user may get in touch with the SCS/AS immediately or later.

It should be noted that an group transfer API allows the SCSA/AS to modify and cancel transfer of the group message.

Modification: An API calling quantity is recorded. If the group information has been sent, a record does not need to be modified, and descriptions need to be provided in a reason for a calling failure. If the group information has not been sent, related field information in the CDR is updated.

Cancellation: An API calling quantity is recorded, and descriptions are provided in a reason that is of a calling failure and that is fed back to the charging system.

In another example, the API calling request is an event monitoring API. A charging trigger time point related thereto is described separately in two cases: online charging and offline charging.

Online charging: The SCEF reserves a resource when receiving an API request message, to pre-authorize an account. When receiving an API response message, the SCEF triggers charging, and sends a CCR message to the charging system to reserve a resource, so as to pre-authorize an account.

Offline charging: When receiving an API request message, the SCEF opens a CDR, adds CDR information during subsequent API message interaction, and reports the CDR when a configured CDR reporting condition is satisfied.

Different API content leads to different parameters carried in CDRs or CCR messages.

The charging data generated by the SCEF based on the content charging parameter is shown in FIG. 7b, and for a parameter shared by charging message bodies and a configured parameter required for charging in FIG. 7b, refer to the foregoing example in FIG. 7a-1 and FIG. 7a-2.

In still another example, the API calling request is background data transfer. The charging data generated by the SCEF based on the content charging parameter is shown in FIG. 7c, and for a parameter shared by charging message bodies and a configured parameter required for charging in FIG. 7c, refer to the foregoing example in FIG. 7a-1 and FIG. 7a-2.

In still another example, the API calling request is QoS configuration. The charging data generated by the SCEF based on the content charging parameter is shown in FIG. 7d, and for a parameter shared by charging message bodies and a configured parameter required for charging in FIG. 7d, refer to the foregoing example in FIG. 7a-1 and FIG. 7a-2.

In still another example, the API calling request is describing a network problem notification. The charging data generated by the SCEF based on the content charging parameter is shown in FIG. 7d, and for a parameter shared by charging message bodies and a configured parameter required for charging in FIG. 7d, refer to the foregoing example in FIG. 7a-1 and FIG. 7a-2.

In still another example, the API calling request is a network parameter configuration notification. The charging data generated by the SCEF based on the content charging parameter is shown in FIG. 7e, and for a parameter shared by charging message bodies and a configured parameter required for charging in FIG. 7e, refer to the foregoing example in FIG. 7a-1 and FIG. 7a-2.

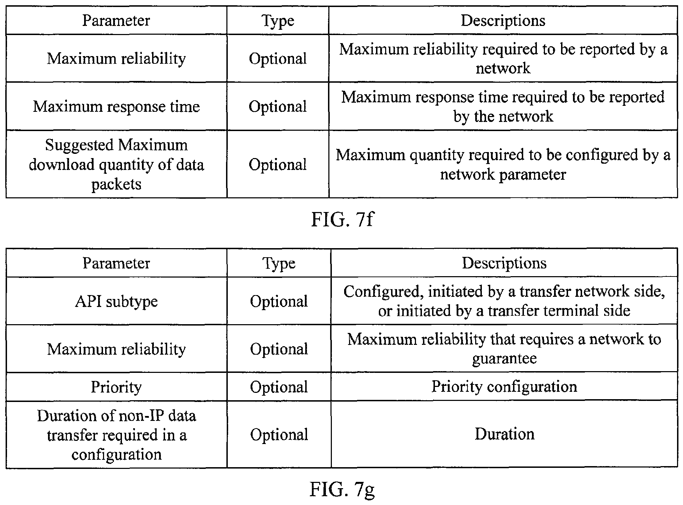

In still another example, the API calling request is describing non-IP data transfer. The charging data generated by the SCEF based on the content charging parameter is shown in FIG. 7f, and for a parameter shared by charging message bodies and a configured parameter required for charging in FIG. 7f, refer to the foregoing example in FIG. 7a-1 and FIG. 7a-2.

In still another example, the API calling request is background data transfer. The charging data generated by the SCEF based on the content charging parameter is shown in FIG. 7g, and for a parameter shared by charging message bodies and a configured parameter required for charging in FIG. 7g, refer to the foregoing example in FIG. 7a-1 and FIG. 7a-2.

FIG. 8 is a schematic diagram of charging data in calling quantity-based charging. When a charging rule for the API calling request is determined as calling quantity-based charging based on a configuration, a time point needs to be set in the configuration. That is, all API calling types related to API calling and corresponding calling quantity of a same caller in a specific time period are recorded, and are reported to the charging system.

According to the API content-based charging method provided in this embodiment of the present invention, when receiving the API calling request, the capability exposure function entity may obtain the corresponding content charging parameter based on the API identifier, and record the charging data based on the content charging parameter, thereby implementing API content-based charging.

The method in the embodiments of the present invention is described above in detail, and apparatuses in the embodiments of the present invention are provided below.

FIG. 9 is a schematic structural diagram of a capability exposure function entity according to an embodiment of the present invention. The capability exposure function entity 9000 includes a receiving unit 91, a processing unit 92, and a sending unit 93.

The receiving unit 91 is configured to receive an application programming interface API calling request, where the API calling request includes an API identifier.

The processing unit 92 is configured to determine, based on a correspondence between the API identifier and a content charging parameter, the content charging parameter corresponding to the API identifier.

The processing unit 92 is further configured to record charging data based on the content charging parameter.

The sending unit 93 is configured to send the charging data to a charging system.

In an implementation, the API identifier corresponds to one content charging parameter, or the API identifier corresponds to a plurality of content charging parameters.

In another implementation, the correspondence between the API identifier and the content charging parameter is configured in the capability exposure function entity or is obtained from a policy control function entity.

In still another implementation, the API calling request further includes a caller identifier, the charging data includes the caller identifier, and the caller identifier is used to identify an identity of a requester sending the API calling request.

In still another implementation, the API calling request further includes an association parameter, where the association parameter is used to associate the API calling request with a response, to perform associated charging.

In still another implementation, the content charging parameter includes at least one of the following parameters: location information, quality of service QoS information, group information, a transmission policy, and charged-party information.

In still another implementation, the charging data further includes a parameter shared by charging message bodies and a configured parameter required for charging.

The parameter shared by the charging message bodies includes at least one of the following parameters: a record type, a service identifier, the API identifier, the charged-party information, a node identifier, and a record sequence number.

The configured parameter required for charging includes at least one of the following parameters: an API subtype, an association identifier, a record start time, duration, a user session connection identifier, a charging characteristic, an external-group identifier, a record closing reason, an API calling quantity, and a calling failure reason.

In still another implementation, the processing unit 92 is specifically configured to: call a network capability based on the API calling request, and record, based on the content charging parameter, the charging data generated for calling the network capability.

In still another implementation, the processing unit 92 is specifically configured to: call the network capability based on a group message sending request, and record, based on the location information and the group information, the charging data generated for calling the network capability, where the charging data includes a quantity of terminals in a group, a group message distribution location, distribution accuracy, a group message transfer time, load of the group message, and a quantity of pieces of information successfully sent and a quantity of pieces of unsuccessfully sent information in the group message.

In still another implementation, the processing unit 92 is specifically configured to: call the network capability based on an event monitoring request, and record, based on the location information, the charging data generated for calling the network capability, where the charging data includes a monitoring type, a maximum monitoring reporting quantity, an actual reporting quantity, a reporting time period, and an actual reporting timestamp.

In still another implementation, the processing unit 92 is specifically configured to: call the network capability based on a QoS configuration request, and record, based on the QoS information, the charging data generated for calling the network capability, where the charging data includes a QoS attribute, application streaming, and duration or traffic.

According to the capability exposure function entity provided in this embodiment of the present invention, when receiving the API calling request, the capability exposure function entity may obtain the corresponding content charging parameter based on the API identifier, and record the charging data based on the content charging parameter, thereby implementing API content-based charging.

FIG. 10 is a schematic diagram of a hardware architecture of a capability exposure function entity according to an embodiment of the present invention. The capability exposure function entity may be configured to perform the foregoing method. The capability exposure function entity 1000 may include a receiver 11, a transmitter 12, a processor 13, and a memory 14. The receiver 11, the transmitter 12, the processor 13, and the memory 14 are interconnected by using a communications cable.

The memory includes but is not limited to a random access memory (random access memory, RAM), a read-only memory (read-only memory, ROM), an erasable programmable read-only memory (erasable programmable read only memory, EPROM), or a compact disc read-only memory (compact disc read-only memory, CD-ROM). The memory is configured to store related instructions and data.

The receiver is configured to receive data and/or a signal, and the transmitter is configured to send data and/or a signal. The transmitter and the receiver may be separate devices or may be an integrated device.

The processor may include one or more processors, for example, may include one or more central processing units (central processing unit, CPU). When the processor is one CPU, the CPU may be a single-core CPU or a multi-core CPU.

Specifically, in an embodiment, a related function implemented by the processing unit 92 in FIG. 9 may be implemented by one or more processors, a related function implemented by the receiving unit 91 may be implemented by the receiver, and a related function implemented by the sending unit 93 may be implemented by the transmitter. The receiver 11 is configured to receive an API calling request, for example, perform step S301 in the embodiment shown in FIG. 3. The processor 13 is configured to: determine, based on a correspondence between the API identifier and a content charging parameter, the content charging parameter corresponding to the API identifier, for example, perform step S302 in the embodiment shown in FIG. 3; and record charging data based on the content charging parameter, for example, performing step S303 in the embodiment shown in FIG. 3. The transmitter 12 is configured to send the charging data to a charging system, for example, performing step S304 in the embodiment shown in FIG. 3.

According to the capability exposure function entity provided in this embodiment of the present invention, when receiving the API calling request, the capability exposure function entity may obtain the corresponding content charging parameter based on the API identifier, and record the charging data based on the content charging parameter, thereby implementing API content-based charging.

An embodiment of the present invention further provides a communications system, including a calling request entity, the foregoing capability exposure entity, and the charging system. The charging system charges for the charging data sent by the capability exposure entity.

A person of ordinary skill in the art may be aware that, in combination with the examples described in the embodiments disclosed in this specification, units and algorithm steps may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electrical, mechanical, or other forms.

The units described as separate parts may or may not be physically separate. Parts displayed as units may or may not be physical units, and may be located in one position, or may be distributed on a plurality of network units. Some or all of the units may be selected based on actual requirements to achieve the objectives of the solutions of the embodiments.

In addition, functional units in the embodiments of this application may be integrated into one processing unit, or each of the units may exist alone physically, or two or more units are integrated into one unit.

All or some of the foregoing embodiments may be implemented by software, hardware, firmware, or any combination thereof. When software is used to implement the embodiments, all or some of the embodiments may be implemented in a form of a computer program product. The computer program product includes one or more computer instructions. When the computer program instructions are loaded and executed on the computer, all or some of the procedures or functions according to the embodiments of the present invention are generated. The computer may be a general-purpose computer, a dedicated computer, a computer network, or other programmable apparatuses. The computer instruction may be stored in a computer-readable storage medium, or may be transmitted by using the computer-readable storage medium. The computer instruction may be transmitted from a website, computer, server, or data center to another website, computer, server, or data center in a wired (for example, by using a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a digital versatile disc (digital versatile disc, DVD), a semiconductor medium (for example, a solid-state drive (solid state drive, SSD)), or the like.

A person of ordinary skill in the art may understand that all or some of the processes of the methods in the embodiments may be implemented by a computer program instructing relevant hardware. The program may be stored in a computer-readable storage medium. When the program runs, the processes of the methods in the embodiments are performed. The foregoing storage medium includes: any medium that can store program code, such as a read-only memory (read-only memory, ROM), a random access memory (random access memory, RAM), a magnetic disk, or a compact disc.

## Claims

1. An API content-based charging method, comprising:
receiving, by a capability exposure function entity, an application programming interface API calling request, wherein the API calling request comprises an API identifier;
determining, by the capability exposure function entity based on a correspondence between the API identifier and a content charging parameter, the content charging parameter corresponding to the API identifier;
recording, by the capability exposure function entity, charging data based on the content charging parameter; and
sending, by the capability exposure function entity, the charging data to a charging system.

2. The method according to claim 1, wherein the API identifier corresponds to one content charging parameter, or the API identifier corresponds to a plurality of content charging parameters.

3. The method according to claim 1 or 2, wherein the correspondence between the API identifier and the content charging parameter is configured in the capability exposure function entity or is obtained from a policy control function entity.

4. The method according to any one of claims 1 to 3, wherein the API calling request further comprises a caller identifier, the charging data comprises the caller identifier, and the caller identifier is used to identify an identity of a requester sending the API calling request.

5. The method according to any one of claims 1 to 4, wherein the API calling request further comprises an association parameter, wherein the association parameter is used to associate the API calling request with an API calling response, to perform associated charging.

6. The method according to any one of claims 1 to 5, wherein the content charging parameter comprises at least one of the following parameters: location information, quality of service QoS information, group information, a transmission policy, and charged-party information.

7. The method according to any one of claims 1 to 6, wherein the charging data further comprises a parameter shared by charging message bodies and a configured parameter required for charging, wherein
the parameter shared by the charging bodies comprise at least one of the following parameters: a record type, a service identifier, the API identifier, the charged-party information, a node identifier, or a record sequence number; and
the configured parameter required for charging comprises at least one of the following parameters: an API subtype, an association identifier, a record start time, duration, a user session connection identifier, a charging characteristic, an external-group identifier, a record closing reason, an API calling quantity, and a calling failure reason.

8. The method according to claim 6 or 7, wherein the recording, by the capability exposure function entity, charging data based on the content charging parameter comprises:
calling, by the capability exposure function entity, a network capability based on the API calling request, and recording, based on the content charging parameter, the charging data generated for calling the network capability.

9. The method according to claim 8, wherein the calling, by the capability exposure function entity, a network capability based on the API calling request, and recording, based on the content charging parameter, the charging data generated for calling the network capability comprises:
calling, by the capability exposure function entity, the network capability based on a group message sending request, and recording, based on the location information and the group information, the charging data generated for calling the network capability, wherein the charging data comprises a quantity of group identifiers, a location, accuracy, a start time, load of a group message, a transfer success state, and a transfer failure state.

10. The method according to claim 8, wherein the calling, by the capability exposure function entity, a network capability based on the API calling request, and recording, based on the content charging parameter, the charging data generated for calling the network capability comprises:
calling, by the capability exposure function entity, the network capability based on an event monitoring request, and recording, based on the location information, the charging data generated for calling the network capability, wherein the charging data comprises a monitoring type, a maximum monitoring reporting quantity, an actual reporting quantity, a reporting time period, and an actual reporting timestamp.

11. The method according to claim 8, wherein the calling, by the capability exposure function entity, a network capability based on the API calling request, and recording, based on the content charging parameter, the charging data generated for calling the network capability comprises:
calling, by the capability exposure function entity, the network capability based on a QoS configuration request, and recording, based on the QoS information, the charging data generated for calling the network capability, wherein the charging data comprises a QoS attribute, application streaming, and duration or traffic.

12. A capability exposure function entity, comprising:
a receiving unit, configured to receive an application programming interface API calling request, wherein the API calling request comprises an API identifier;
a processing unit, configured to determine, based on a correspondence between the API identifier and a content charging parameter, the content charging parameter corresponding to the API identifier, wherein
the processing unit is further configured to record charging data based on the content charging parameter; and
a sending unit, configured to send the charging data to a charging system.

13. The capability exposure function entity according to claim 12, wherein the API identifier corresponds to one content charging parameter, or the API identifier corresponds to a plurality of content charging parameters.

14. The capability exposure function entity according to claim 12 or 13, wherein the correspondence between the API identifier and the content charging parameter is configured in the capability exposure function entity or is obtained from a policy control function entity.

15. The capability exposure function entity according to any one of claims 12 to 14, wherein the API calling request further comprises a caller identifier, the charging data comprises the caller identifier, and the caller identifier is used to identify an identity of a requester sending the API calling request.

16. The capability exposure function entity according to any one of claims 12 to 15, wherein the API calling request further comprises an association parameter, wherein the association parameter is used to associate the API calling request with an API calling response, to perform associated charging.

17. The capability exposure function entity according to any one of claims 12 to 16, wherein the content charging parameter comprises at least one of the following parameters: location information, quality of service QoS information, group information, a transmission policy, and charged-party information.

18. The capability exposure function entity according to any one of claims 12 to 17, wherein the charging data further comprises a parameter shared by charging message bodies and a parameter required for charging configuration, wherein
the parameters shared by the charging bodies comprise at least one of the following parameters: a record type, a service identifier, the API identifier, the charged-party information, a node identifier, and a record sequence number; and
the parameter required for charging configuration comprises at least one of the following parameters: an API subtype, an association identifier, a record start time, duration, a user session connection identifier, a charging characteristic, an external-group identifier, a record closing reason, an API calling quantity, and a calling failure reason.

19. The capability exposure function entity according to any one of claims 12 to 18, wherein the processing unit is specifically configured to: call a network capability based on the API calling request, and record, based on the content charging parameter, the charging data generated for calling the network capability.

20. The capability exposure function entity according to claim 19, wherein the processing unit is specifically configured to: call the network capability based on a group message sending request, and record, based on the location information and the group information, the charging data generated for calling the network capability, wherein the charging data comprises a quantity of group identifiers, a location, accuracy, a start time, load of a group message, a transfer success state, and a transfer failure state.

21. The capability exposure function entity according to claim 19, wherein the processing unit is specifically configured to: call the network capability based on an event monitoring request, and record, based on the location information, the charging data generated for calling the network capability, wherein the charging data comprises a monitoring type, a maximum monitoring reporting quantity, an actual reporting quantity, a reporting time period, and an actual reporting timestamp.

22. The capability exposure function entity according to claim 19, wherein the processing unit is specifically configured to: call the network capability based on a QoS configuration request, and record, based on the QoS information, the charging data generated for calling the network capability, wherein the charging data comprises a QoS attribute, application streaming, and duration or traffic.
